# EUROPEAN PATENT APPLICATION

(11) **EP 1 923 732 A1**
(43) Date of publication of application: **21.05.2008**
(21) Application number: 07022170.0
(22) Date of filing: 15.11.2007
(51) Int. Cl.: G02F 1/1333, G02F 1/1335

(54) **Thin film transistor substrate for transflective displays and method of fabricating it**

(30) Priority: 17.11.2006 KR 20060114115
(71) Applicant: Samsung Electronics Co., Ltd., Yeongtong-gu Suwon-city, Gyeonggi-do 442-742 (KR)
(72) Inventor: Bae, Ju-Han, Suwon-si, Gyeonggi-do (KR); Park, Dae-Jin, Yeonsu-gu, Incheon (KR)
(74) Representative: Dr. Weitzel & Partner

(57) **Abstract**

A thin film transistor substrate (1) includes a reflection area (RA) and a transmission area (TA) formed in a pixel region, a thin film transistor (10) formed in the reflection area (RA) and connected to a gate line (2;11) and a data line (3;15), an imprint layer (8) formed in the reflection area (RA) and having an optical pattern surface (OP), a reflective electrode (5) formed on the imprint layer (8) and having the same cross section as the optical pattern, a contact portion (6) penetrating the imprint layer (8) and the reflective electrode (5) to expose a portion of a drain electrode (16) of the thin film transistor (10), and a pixel electrode (7) connected to the reflective electrode (5) and connected to the drain electrode (16) via the contact portion (6).

## Description

### CROSS-REFERENCE TO RELATED APPLICATION

This application claims priority to Korean Patent Application No. 10-2006-0114115, filed on November 17, 2006, the disclosure of which is hereby incorporated herein by reference in its entirety for all purposes.

### BACKGROUND

### 1. Field of the Invention

The present invention relates to a thin film transistor ("TFT") substrate and method of fabricating the same.

### 2. Description of the Related Art

A liquid crystal display ("LCD") device includes two opposing substrates on which respective electrodes are formed. A liquid crystal layer is disposed between the two substrates, The LCD device displays an image based on application of a voltage to electrodes of the two substrates to form an electrical field for changing orientation of liquid crystal molecules, thereby adjusting light transmissivity.

An LCD device does not generate light by itself and thus needs an additional light source. LCD devices are classified into a transmission type and a reflective type. The transmission type LCD device displays an image by adjusting the transmissivity of light emitted from a back light unit arranged on a bottom thereof according to orientation of liquid crystal molecules. The reflective type of LCD device displays an image by reflecting ambient light to adjust light transmissivity.

The transmission type LCD device provides a bright image even in a dark environment because it uses a light source, but it is disadvantageous in that its power consumption is very high. On the other hand, the reflective type of LCD device has low power consumption because it uses ambient light, but it has a disadvantage in that it can not be used in dark places.

A transflective LCD device which selectively uses the two modes according to environments has been introduced.

In the transflective LCD device, a unit pixel region comprises a reflection area and a transmission area. A reflective electrode is arranged in the reflection area, and a pixel electrode made of a transparent material is arranged on the transmission area. The reflective electrode has an embossed shape rather than being planar in order to maximize reflection efficiency. In particular, the reflection efficiency is maximized when a concave mirror shape or asymmetrically embossed shape is formed.

It is difficult to form the concave mirror shape or the asymmetrically embossed shape through a photolithography process using a slit mask, and thus the concave mirror shape and the asymmetrically embossed shape are formed through an imprint process. A remainder layer inevitably exists when an optical pattern of the concave mirror shape or the asymmetrically embossed shape is formed. It is desirable to remove the remainder layer because it obstructs a connection between a pixel electrode and a drain electrode.

The optical pattern may become etched during a process of removing the remainder layer, so that the concave mirror shape or asymmetrically embossed shape is degraded. Portions that are adjacent to the concave mirrors overlap and are etched more than other portions, thus making the pattern flat and leading to low reflection efficiency.

### SUMMARY

The present invention provides a TFT substrate which has a reflective electrode with a fine optical pattern and a method of fabricating the same.

An exemplary embodiment of the present invention provides a TFT substrate including a reflection area and a transmission area formed in a pixel region, a TFT formed in the reflection area and connected to a gate line and a data line, an imprint layer formed in the reflection area, the imprint layer having on an upper surface an optical pattern, a reflective electrode formed on the optical pattern of the imprint layer, the reflective electrode having a pattern conforming to the optical pattern, wherein the imprint layer and the reflective layer are configured such that a portion of a drain electrode of the thin film transistor is exposed, and a pixel electrode on the reflective electrode, the pixel electrode including a portion which contacts the drain electrode.

Another exemplary embodiment of the present invention provides a method of fabricating a TFT substrate including forming a pixel region having a reflection area on a substrate, forming a TFT connected to a gate line and a data line, forming an imprint layer over the substrate, modifying a surface of the imprint layer to form an optical pattern, and forming a reflective electrode on the optical pattern of the imprint layer.

### BRIEF DESCRIPTION OF THE DRAWINGS

The features of the present invention will become more apparent to those of ordinary skill in the art by describing in detail exemplary embodiments thereof with reference to the attached drawings, in which:
FIG 1 is a plan view of a TFT substrate according to an exemplary embodiment of the present invention;
FIG. 2 is a cross-sectional view of the TFT substrate in FIG. 1 taken along line I-I';
FIG. 3 is a cross-sectional view of the TFT substrate according to another exemplary embodiment of the present invention;
FIG. 4A is a plan view illustrating structure after using a first mask in the process of fabricating the TFT substrate according to the exemplary embodiment of the present invention;
FIG. 4B is a cross-sectional view taken along line IVB-IVB of FIG 4A;
FIG. 5A is a plan view illustrating the structure of FIG. 4A after a second mask process;
FIG. 5B is a cross-sectional view taken along line VB-VB of FIG. 5A after further processing;
FIG 6A is a plan view illustrating the structure after a third mask process;
FIG. 6B is a cross-sectional view taken along line VIB-VIB of FIG. 6A;
FIG. 7 is a cross-sectional view illustrating a process of forming a passivation film over the structure of FIG, 6B;
FIGs. 8A and 8B are cross-sectional views illustrating an imprint process according to the exemplary embodiment of the present invention;
FIG. 9 is a plan view illustrating a structure generated by fourth mask process;
FIGs. 10A to 10C are successive cross-sectional views taken along line XA-XA of FIG. 9, illustrating a fourth mask process of fabricating the TFT substrate according to the exemplary embodiment of the present invention;
FIG. 11A is a plan view illustrating structure after a fifth mask process of fabricating the TFT substrate according to the exemplary embodiment of the present invention; and
FIG 11 B is a cross-sectional view taken along line XIB-XIB of FIG. 11A.

### DETAILED DESCRIPTION

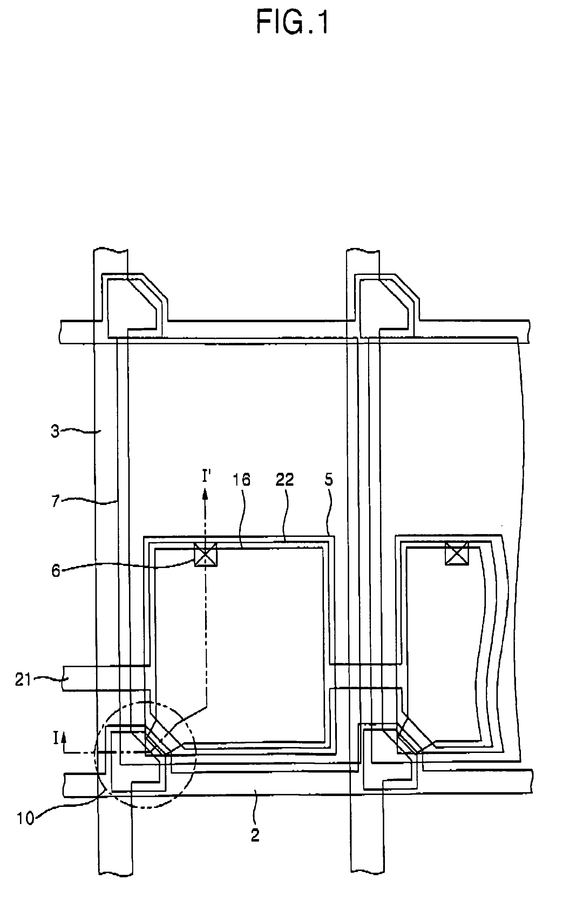

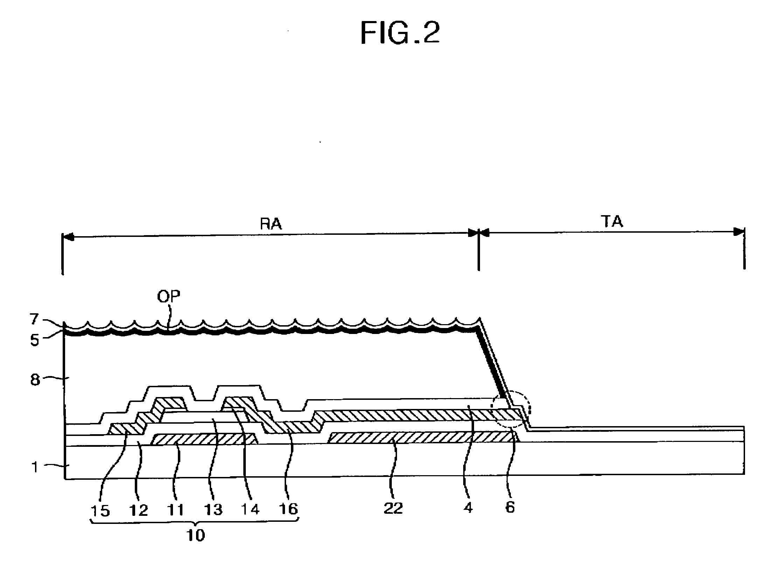

FIG. 1 is a plan view of a TFT substrate according to an exemplary embodiment of the present invention, and FIG. 2 is a cross-sectional view of the TFT substrate of FIG. 1 taken along lines I-I'. Referring to FIGS. 1 and 2, the TFT substrate comprises a substrate 1, a gate line 2, a data line 3, a TFT 10, a passivation film 4, a reflective electrode 5, a contact portion 6, a pixel electrode 7, and an imprint layer 8. The substrate 1 is an insulating substrate and may be formed of a glass substrate having a thickness of about 0.7mm.

The gate line 2 is formed on the substrate 1 in a line form and supplies a gate scan signal transmitted from a driving circuit portion (not shown) to the TFT 10. A plurality of gate lines 2 are arranged parallel to each other in one direction at a regular interval. The gate lines 2 determine a horizontal or vertical width of a pixel region.

The data line 3 is arranged in a substantially perpendicular direction to the gate line 2, insulated from the gate line 2. The data lines 3 determine a horizontal or vertical width of the pixel region. A pixel signal is supplied to the TFT 10 from the driving circuit portion (not shown) through the data line 3.

The TFT 10 is formed at a crossing point of the gate and data lines 2 and 3, and is connected to the gate line 2 and the data line 3. The TFT 10 performs a switching operation in response to the gate scan signal transmitted through the gate line 2. The TFT 10 transmits the signal from the data line 3 to the reflective electrode 5 and the pixel electrode 7.

The TFT 10 comprises a gate electrode 11, a gate insulating layer 12, an active layer 13, an ohmic contact layer 14, a source electrode 15, and a drain electrode 16. The gate electrode 11 extends from the gate line 2. The active layer 13, which may be made of amorphous silicon is arranged on the gate electrode 11 to overlap the gate electrode 11. The active layer 13 is insulated from the gate electrode 11 by the gate insulating layer 12. The active layer 13 forms a channel between the source and drain electrodes 15 and 18.

The ohmic contact layer 14 is arranged on the active layer 13. The ohmic contact layer 14 is formed between the active layer 13 and the source electrode 15 and between the active layer 13 and the drain electrode 16. The active layer 13 and the source electrode 15 or the active layer 13 and the drain electrode 16 have great contact resistance therebetween, and thus a work function difference is great. The great contact resistance leads to bad transistor characteristics. The ohmic contact layer 14 serves to reduce the contact resistance between the active layer 13 and the source electrode 15 and between the active layer 13 and the drain electrode 16, thereby improving transistor characteristics.

The source electrode 15 extends from the data line 3 and overlaps one end of the active layer 13. The source electrode 15 receives the data signal from the data line 3.

The data signal is transmitted to the drain electrode 16 via a channel formed in the active layer 13 while the scan signal is applied to the gate electrode 11.

The drain electrode 16 is arranged to face the source electrode 15. The drain electrode 16 partially overlaps the other end of the active layer 13. The drain electrode 16 extends toward a center of the pixel region to be formed along the whole reflection area as shown in FIG. 1. The TFT substrate has a reflection area RA and a transmission area TA because it is employed in the transflective LCD device. Since light can not pass through the reflection area RA, even though the drain electrode 16 is formed along the whole reflection area RA, it does not affect light transmissivity.

The drain electrode 16 forms a storage capacitor together with a storage electrode 22, and thus the drain electrode 16 of such a large area helps increase the capacitance of the storage capacitor.

The imprint layer 8 is formed on the substrate 1 having the TFT 10 to protect the TFT 10 while forming a optical pattern, also referred to herein as an optical pattern OP, on which the reflective electrode 5 is subsequently formed in the reflection area RA. The optical pattern OP is formed by using an imprint process. The imprint layer 8 is formed of an organic material layer in which the imprint process can be performed. The imprint layer 8 is formed in the reflection area RA and has an upper surface with an optical pattern shape. The optical pattern OP functions to increase the reflection efficiency in the reflection area RA. Since forming the reflective electrode 5 is difficult, the optical pattern OP is first formed on the imprint layer 8, and then the thin reflective electrode 5 Is deposited on the optical pattern OP. Therefore, the reflective electrode 5 has the substantially same shape as the optical pattern OP as shown in FIG. 2.

The optical pattern OP is shaped to form in conjunction with the reflective electrode 5 a plurality of concave mirrors as shown in FIG. 2. The optical pattern OP may alternatively have various embossing shapes such as a convex mirror or a wave.

The optical pattern OP may be formed such that with reflective electrode 5 a concave mirror is formed with right and left sides being asymmetrical to improve a viewing angle in a reflection mode.

The reflective electrode 5 is arranged in the reflection area RA to reflect ambient light. The reflective electrode 5 is formed on the imprint layer 8. Since the imprint layer 8 is defined in the reflection area RA, the reflective electrode 5 is arranged to be defined in the reflection area RA. As described above, the reflective electrode 5 has the substantially same shape as the optical pattern OP The reflective electrode 5 may be made of metal having an excellent reflective characteristic. The reflective electrode 5 is connected to the drain electrode 16 via the pixel electrode 7 formed thereon. As described above, since the reflective electrode 5 is formed directly on the imprint layer 8 without performing, for example, any process such as an etching process, the optical pattern OP formed on a surface of the imprint layer 8 does not get damaged. That is, if an etching process is performed before depositing the reflective electrode after the very fine optical pattern OP is formed on the imprint layer 8, the optical pattern OP may get damaged. However, since the reflective electrode 5 is deposited directly on the imprint layer 8 without performing the etching process, the non-damaged fine pattern OP can be copied to the reflective electrode 5.

The contact portion 6 is formed to penetrate the reflective electrode 5 and the imprint layer 8. The contact portion 6 exposes a portion of the drain electrode 16 to provide a space where the pixel electrode 7 and the drain electrode 16 contact.

The contact portion 6 may be formed in a boundary between the reflection area RA and the transmission area TA as shown in FIG. 2. The drain electrode 16 is formed along the whole reflection area RA and portions of the reflective electrode 5 and the imprint layer 8 formed in the reflection area RA are removed to expose a portion of the drain electrode 16. The contact portion 6 belongs to neither the reflection area RA nor the transmission area TA and thus it is not a portion which displays an image. Thus, it is preferable to minimize the area size of the contact portion 6.

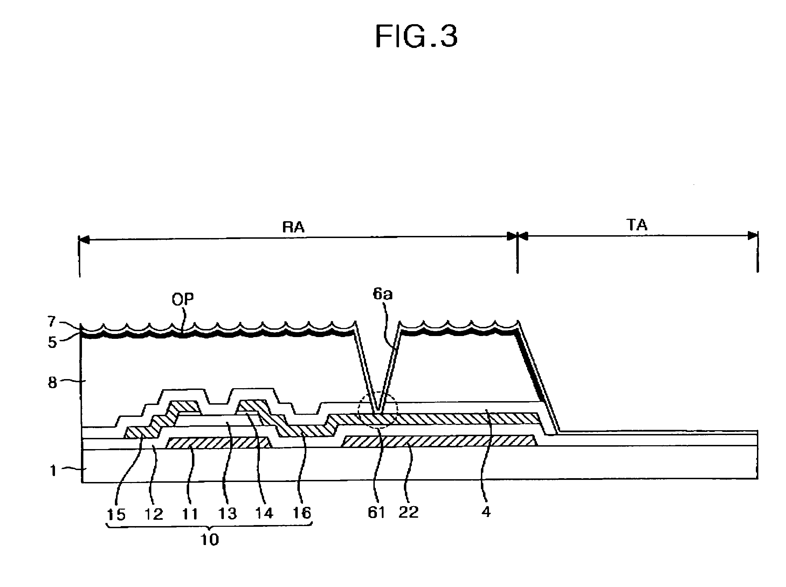

Alternatively, the contact portion 6 may be formed in the reflection area RA as shown in FIG. 3. In this instance, a contact hole 6a which penetrates the reflective electrode 5 and the imprint layer 8 is formed. The contact hole 6a permits a contact portion 61. The pixel electrode 7 is connected to the drain electrode 16 at area 61 via the contact hole 6a.

The pixel electrode 7 is connected to the drain electrode 16 through the contact portion 61 as described above and is formed to overlap and contact the reflective electrode 5 partially or overall. The pixel electrode 7 serves to form an electric field together with a common electrode (not shown) which is separately provided in case where the TFT substrate is employed in the display device. The pixel electrode 7 is arranged in the transmission area TA, so that a pixel voltage is applied to the pixel electrode 7 in a transmission mode.

The pixel electrode 7 is also formed in the whole reflection area RA in which the reflective electrode 5 is formed as shown in FIGs. 1 and 2. That is, both the pixel electrode 7 and the reflective electrode 5 overlap in the reflection area RA, and only the pixel electrode 7 exists in the transmission area TA. Since the reflective electrode 5 does not transmit light but reflects light, the reflective electrode 5 should not exist in the transmission area TA. Thus, the reflective electrode 5 is limited to the reflection area RA.

On the contrary, since the pixel electrode 7 is made of a transparent material for transmitting light, even though the pixel electrode 7 exists on the reflective electrode 5, the material of the pixel electrode 7 does not become an obstacle to realize the reflection mode. For this reason, the pixel electrode 7 may be arranged even in the reflection area RA. The reflective electrode 5 and the pixel electrode 7 which overlap each other are connected to each other. Since the pixel electrode 7 is connected to the drain electrode 16 via the contact portion 6 or 61, the reflective electrode 5 receives the pixel voltage through the pixel electrode 7.

The TFT substrate of the present invention further includes the storage electrode 22 as shown in FIGs. 1 and 2. The storage electrode 22 extends from the storage line 21 arranged parallel to the gate line 2 to receive a storage voltage. The storage electrode 22 is arranged to overlap the drain electrode 16 with the gate insulating layer 12 interposed therebetween to thereby form a storage capacitor. The storage capacitor serves to stabilize the pixel voltage applied to the reflective electrode 5 and the pixel electrode 7.

The TFT substrate of the present invention is employed in the transflective LCD device, and so the reflection area RA occupies a large part of the pixel region which does not need to transmit light. Thus, the storage capacitor may be formed to have a sufficient capacitance in the reflection area RA, That is, as shown in FIGs. 1 and 2, the drain electrode 16 and the storage electrode 22 are formed with the large area size along the whole reflection area RA. The drain electrode 16 and the storage electrode 22 with the large area size increases the capacitance of the storage capacitor, thereby stably maintaining the pixel voltage.

The TFT substrate of the present invention can constitute the LCD device together with a color filter substrate (not shown) with a liquid crystal layer (not shown) interposed between the two substrates. On the color filter substrate, a color filter is arranged for each pixel to realize various colors, and a common electrode (not shown) is arranged to cover the color filter. The common electrode serves to form an electric field together with the reflective electrode 5 or the pixel electrode 7 according to a selected mode. That is, the common electrode forms an electric field together with the reflective electrode 5 in the reflection mode, and the common electrode forms an electric field together with the pixel electrode 7 in the transmission mode.

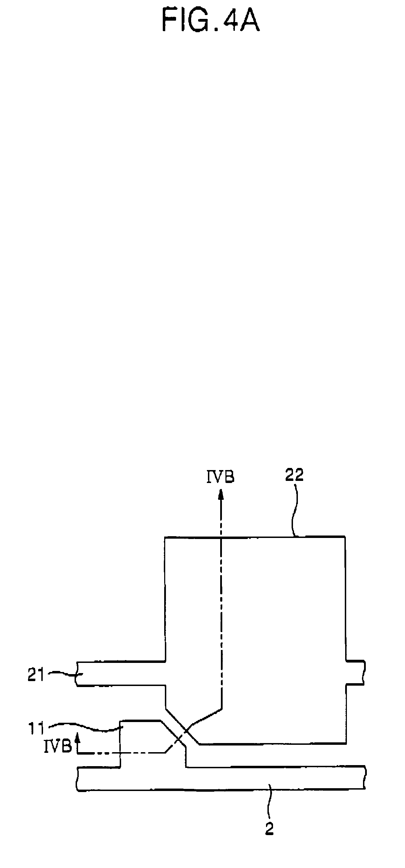

A process of fabricating the TFT substrate according to the exemplary embodiment of the present invention is described below with reference to FIGs. 4A to 11B,

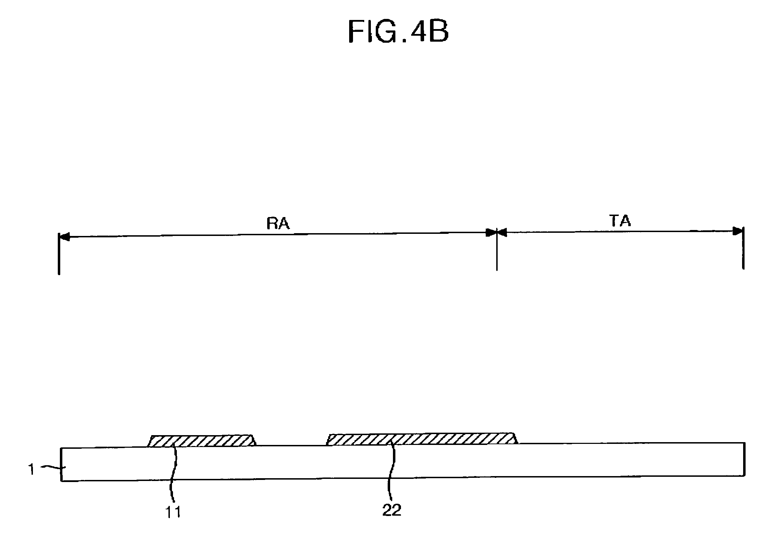

FIG. 4A is a plan view illustrating a first mask process of fabricating the TFT substrate according to the exemplary embodiment of the present invention. FIG. 4B is a cross-sectional view taken along line IVB-IVB of FIG 4A.

A gate metal pattern including the gate line 2, the gate electrode 11, the storage line 21, and the storage electrode 22 is formed on the substrate 1 through the first mask process.

In more detail, a gate metal layer is deposited on the substrate 1 by using, for example, a sputtering technique. The gate metal layer has a single layer structure made of one of molybdenum (Mo), titanium (Ti), copper (Cu), aluminum neodymium (AINd), aluminum (Al), chromium (Cr), a Mo alloy, a Cu alloy, and an Al alloy. Alternatively, a multi-layer structure made of a combination thereof may be used.

The gate metal layer is then patterned through a photolithography process using a first mask and an etching process to form the gate metal pattern including the gate line 2, the gate electrode 11, the storage line 21, and the storage electrode 22. At this time, as shown in FIG. 4A, the storage electrode 22 is formed along the whole reflection area.

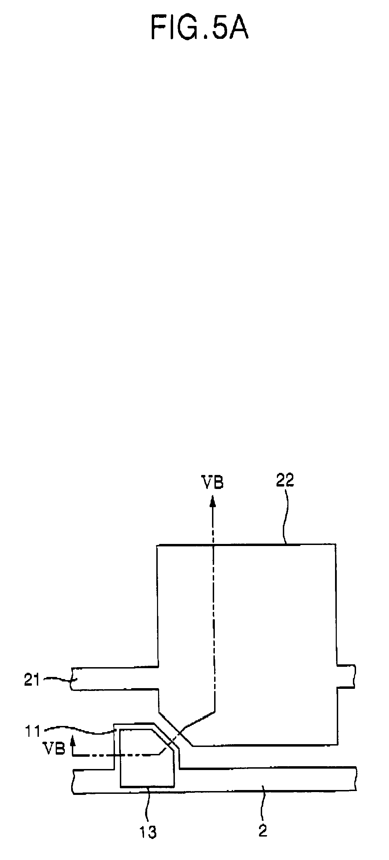

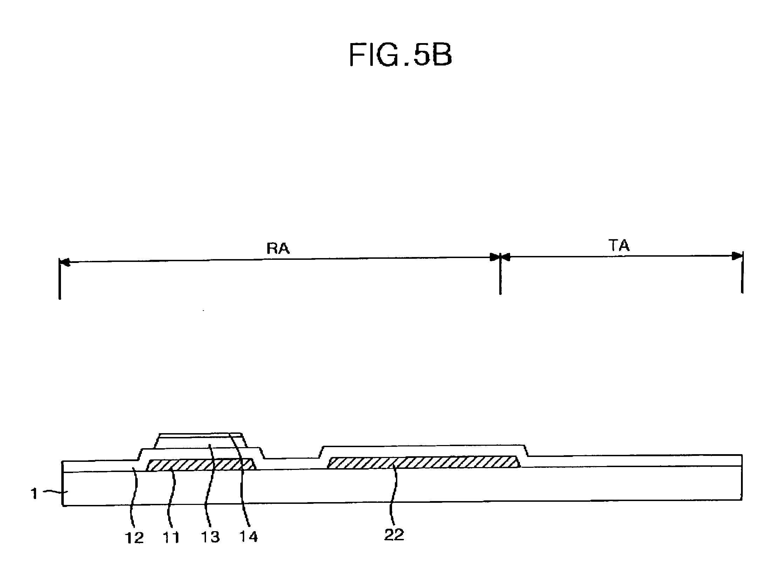

FIG. 5A is a plan view illustrating a second mask process of fabricating the TFT substrate according to the exemplary embodiment of the present invention. FIG. 5B is a cross-sectional view taken along line VB-VB of FIG 5A.

The gate insulating layer 12 is formed over the whole surface of the substrate 1 depositing the gate metal layer, and a semiconductor pattern including the active layer 13 and the ohmic contact layer 14 is formed on the gate insulating layer 12 through a second mask process.

In more detail, the gate insulating layer 12, an amorphous silicon layer, and an n+ or p+ doped amorphous silicon layer are sequentially deposited on the substrate 1 having the gate metal pattern by using, for example, a plasma enhanced chemical vapor deposition ("PECVD") technique. The gate insulating layer 12 is made of an inorganic insulating material such as silicon oxide (SiOx) or silicon nitride (SiNx). A photoresist is coated on the doped amorphous silicon layer, and the amorphous silicon layer and the doped amorphous silicon layer are patterned by a photolithography process and an etching process using a second mask to form the semiconductor pattern.

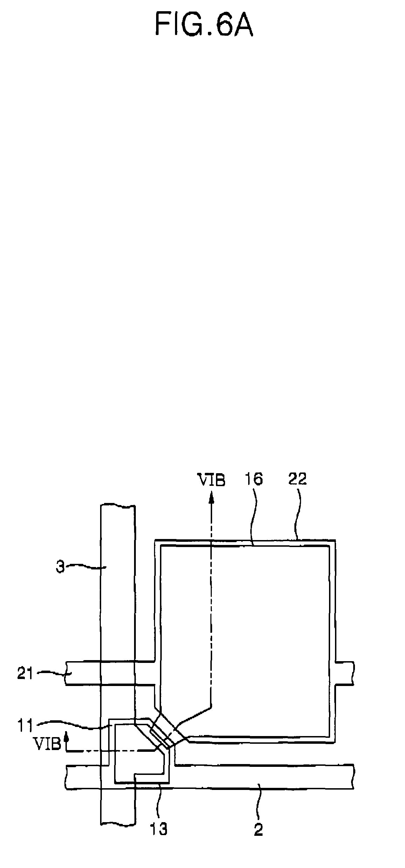

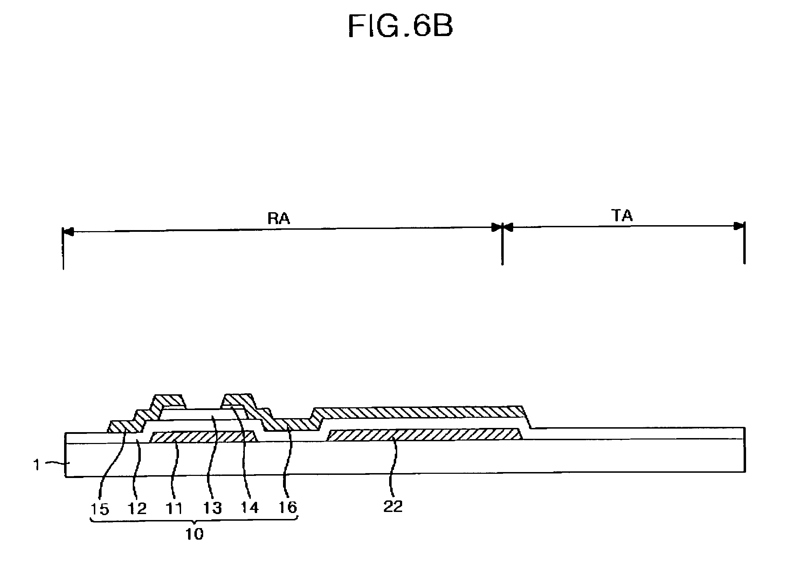

FIG. 6A is a plan view illustrating a third mask process of fabricating the TFT substrate according to the exemplary embodiment of the present invention. FIG. 6B is a cross-sectional view taken along line VIB-VIB of FIG. 6A.

A source/drain metal pattern including the data line 3, the source electrode 15 and the drain electrode 16 is formed on the substrate 1 having the semiconductor pattern through a third mask process.

More specifically, a source/drain metal layer is deposited on the substrate 1 having the semiconductor pattern by using, for example, a sputtering technique. The source/drain metal layer has a single layer structure made of one of Mo, Ti, Cu, AlNd, Al, Cr, a Mo alloy, a Cu alloy, and an Al alloy, or alternatively using a multi-layer structure made of a combination of the foregoing materials.

A photoresist is coated on the source/drain metal layer and then patterned by a photolithography process and an etching process using a third mask to form the source/drain metal pattern including the data line 3, the source electrode 15 and the drain electrode 16. Here, a portion of the ohmic contact layer 14 between the source and drain electrodes 15 and 16 is etched together when the source/drain metal layer is etched. As a result, the ohmic contact layer 14 remains only below the source and drain electrodes 15 and 16 as shown in FIG. 6B.

The drain electrode 16 is formed over the whole reflection area RA and covers one end of the active layer 13 as shown in FIGS. 6A and 6B. The drain electrode 16 is widely formed to increase the area overlapping the storage electrode 22, thereby increasing the capacitance of the storage capacitor.

While the semiconductor pattern and the source/drain metal pattern formed by two mask processes has been described, the semiconductor pattern and the source/drain metal pattern may be also formed by a single mask process using a slit mask or a half-tone mask. In case of forming the semiconductor pattern and the source/drain metal pattern through a single mask process, there is an advantage in that the number of mask processes is reduced.

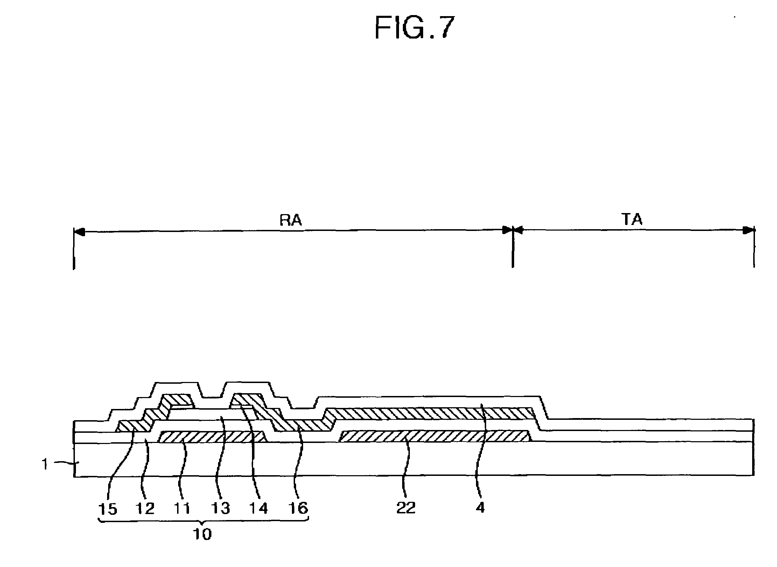

FIG. 7 is a cross-sectional view illustrating a process of forming a passivation film 4 according to the exemplary embodiment of the present invention. The passivation film 4 is formed on the substrate 1 having the source/drain metal pattern to thereby improve the TFT characteristics while protecting the TFT. The passivation film 4 is preferably made of an inorganic insulating material such as SiOx or SiNx,

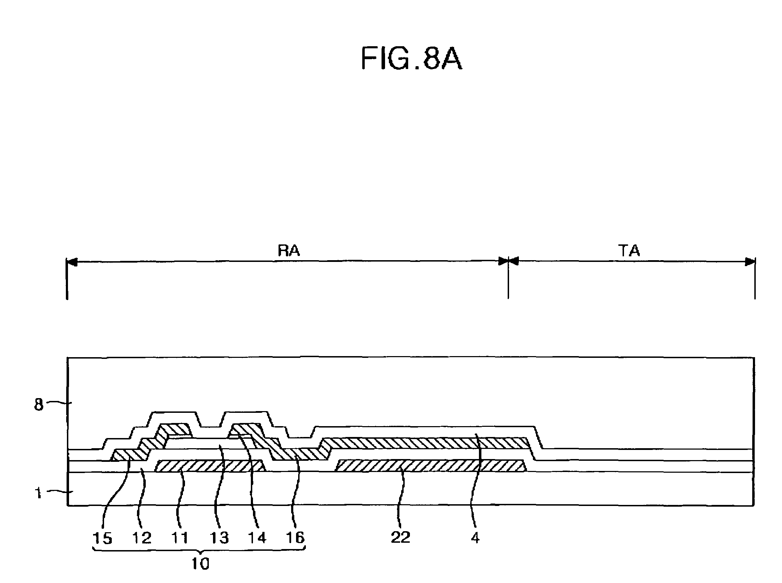

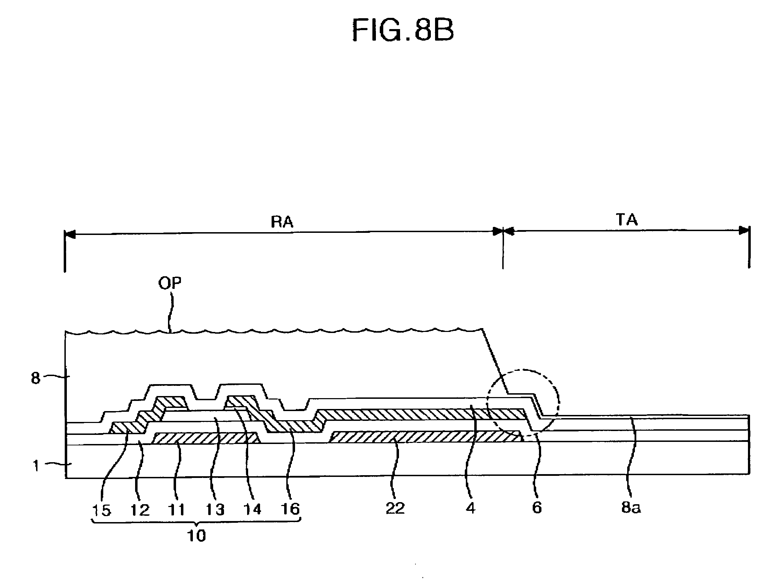

FIGS. 8A and 8B are cross-sectional views illustrating an imprint process according to the exemplary embodiment of the present invention.

An organic material layer for the imprint process is deposited with a predetermined thickness on the substrate 1 having the passivation film 4. The organic material layer is pressed by using a mold to form the imprint layer 8 having a predetermined shape. As shown in FIG. 8B, the imprint layer 8 remains in the reflection area RA, is removed from the transmission area TA and has a pattern for forming the contact portion 6. The pattern for the contact portion 6 may be formed in the boundary between the reflection area RA and the transmission area TA as shown in 8B, but the pattern for the contact portion 6 may be formed in the reflection area RA.

In a typical imprint process, a master having a desired shape is first made, and a mold is made by using the master. The mold is a component which is repetitively used to form a desired shape on the substrate. The mold may get damaged or transformed due to the repetitive use. Thus, the mold should no longer be used after it is repetitively used a predetermined number of times, and a new mold should be made from the master.

After pressing the organic material layer by using the mold to form the imprint layer 8, the remainder layer 8a of the organic material layer which is not removed yet remains as shown in FIG. 8B. The remainder layer 8a should be removed for a contact between the pixel electrode 7 and the drain electrode 16, In the exemplary embodiment of the present invention, the remainder layer 8a is not removed directly after forming the imprint layer 8, but the remainder layer 8a is removed together when patterning the reflective electrode 5.

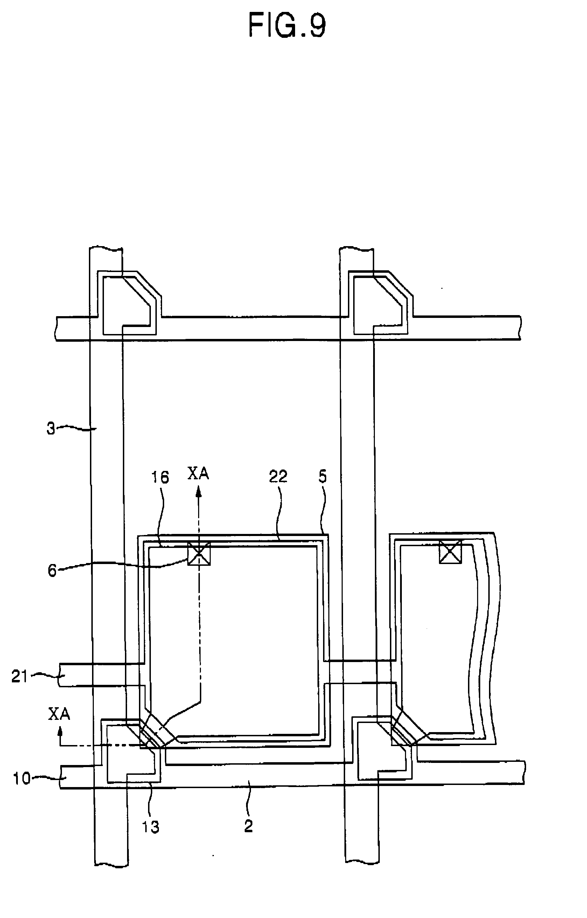

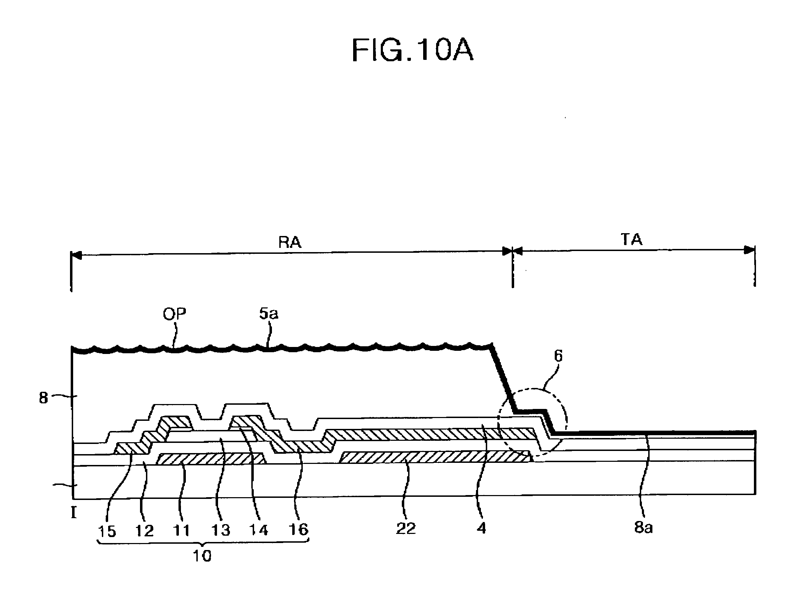

FIG. 9 is a plan view illustrating a fourth mask process of fabricating the TFT substrate according to the exemplary embodiment of the present invention. FIGS. 10A to 10C are cross-sectional views taken along line XA-XA of FIG. 9, illustrating the fourth mask process of fabricating the TFT substrate according to the exemplary embodiment of the present invention.

As shown in FIG. 10A, a reflective electrode layer 5a is formed on the imprint layer 8. For example, the reflective electrode layer 5a is formed by depositing a metal layer made of Al or an Al alloy on the imprint layer 8 by using a sputtering technique.

As described above, the reflective metal layer 5a is formed directly after forming the imprinting layer 8 without performing any process. Thus, the optical pattern formed by the imprint process does not get damaged at all and contributes to forming the reflective electrode. Accordingly, the reflective electrode has the optical pattern substantially identical to the optical pattern which is precisely formed by the imprint process, and thus the reflection efficiency is significantly improved compared to the conventional art. In the conventional art, since an ashing process of removing the remainder layer is performed after forming an imprint pattern, there has been a disadvantage in that the imprint pattern also gets damaged.

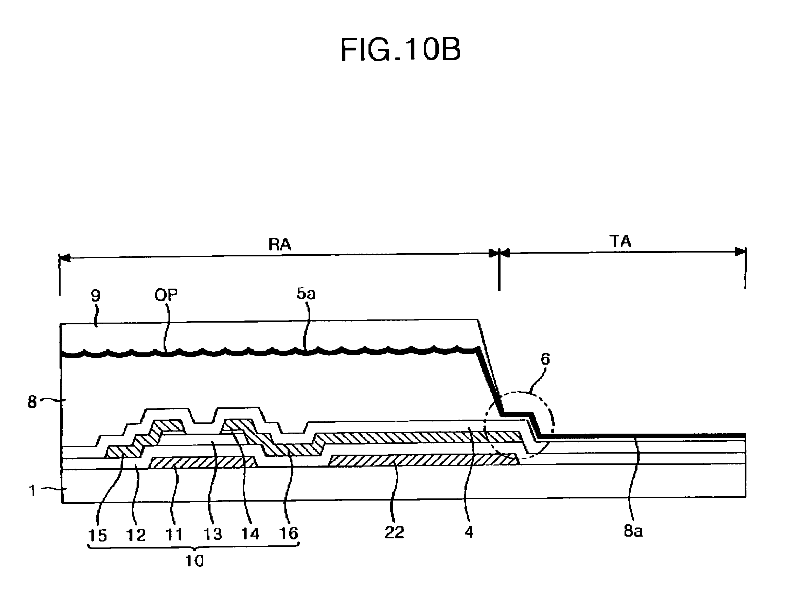

A photoresist pattern 9 is formed on the reflective electrode layer 5a through a photolithography process as shown in FIG. 10B. The photoresist pattern 9 is formed only in the reflection area RA and is not formed in the transmission area TA. In addition, the photoresist pattern 9 is not formed in a region where the contact portion 6 will be formed to thereby expose a portion of the drain electrode 16. That is, the photoresist pattern 9 exposes a portion of the reflective electrode layer 5a corresponding to the transmission area TA and the contact portion 6.

In the exemplary embodiment of the present invention, an additional mask for forming the contact portion 6 is not made. That is, the mask (i.e., photoresist pattern 9) for patterning the reflective electrode 5 is also used to form the contact portion 6. Accordingly, the number of mask processes is reduced, compared to the conventional art that requires two mask processes to form the contact portion and the reflective electrode, leading to a low manufacturing cost.

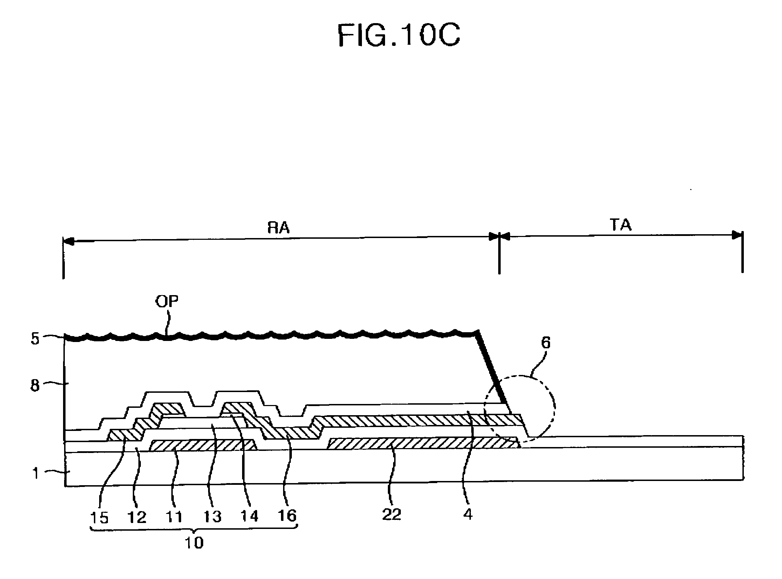

Next, as shown in FIG. 10C, a portion of the reflective electrode layer 5a in region 6, and the remainder layer 8a in region TA and a portion of the passivation film 4 which are exposed by the photoresist pattern 9 are removed by using the photoresist pattern as a fourth mask, In more detail, the exposed portion of the reflective electrode layer 5a is first removed by using a dry etching technique, and then the remainder layer 8a and the exposed portion of the passivation film 4 are removed by using a dry etching technique or an ashing technique, thereby forming the reflective electrode 5 and the contact portion 6. In case where the passivation film 4 is not formed or in case where the passivation film 4 and the imprint layer 8 made of a same material, the same gas may be used in the dry etching process or the ashing process, but in case where the passivation film 4 and the imprint layer 8 made of a different material, a different gas should be used in the ashing process.

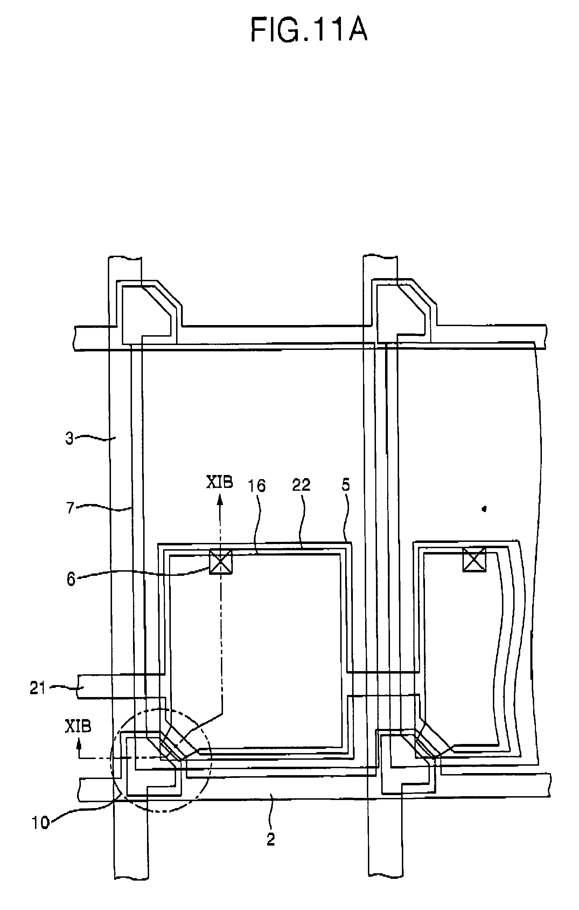

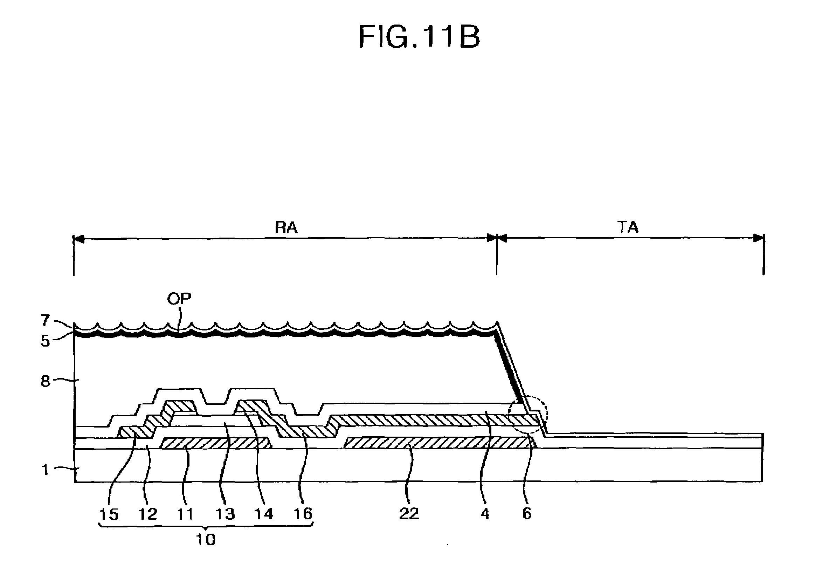

FIG. 11A is a plan view illustrating a fifth mask process of fabricating the TFT substrate according to the exemplary embodiment of the present invention. FIG. 11B is a cross-sectional view taken along line XIB-XIB of FIG 11A.

The pixel electrode 7 is formed on the substrate 1 having the reflective electrode 5.

In more detail, a transparent metal layer is deposited on the substrate 1 having the reflective electrode 5 by using, for example, a sputtering technique. The transparent metal layer is made of indium tin oxide (ITO), thin oxide (TO), indium zinc oxide (IZO), tin dioxide (SnO₂), or amorphous-ITO.

The transparent metal layer is patterned by a photolithography process and an etching process using a fifth mask to form the pixel electrode 7. The pixel electrode 7 is formed over the whole pixel region as shown in FIG. 11A. That is, the pixel electrode 7 is formed in the reflection area RA as well as the transmission area TA. Since the pixel electrode 7 is formed in the reflection area RA, the pixel electrode 7 is connected to the reflective electrode 5. Here, the pixel electrode 7 may contact the reflective electrode 5 partially or overall because it is enough only if the pixel electrode 7 is connected to the reflective electrode 5. It is preferable that the pixel electrode 7 is formed along the whole reflection area RA for uniform screen display.

The pixel electrode 7 is connected to the drain electrode 16 via the contact portion 6. That is, as shown in FIG. 11B, the pixel electrode 7 is connected to the drain electrode 16 via the contact portion 6 which is formed in the boundary between the reflection area RA and the transmission area TA to expose a portion of the drain electrode 16. Since the pixel electrode 7 is connected to the drain electrode 16, the reflective electrode 5 connected to the pixel electrode 7 is also connected to the drain electrode 16.

As described above, according to the present invention, since the reflective electrode is formed directly after forming the optical pattern by the imprint process without performing any process, the optical pattern formed by the imprint process does not get damaged at all. Accordingly, there is an advantage in that it is easy to form the reflective electrode with a very precise optical pattern such as a concave mirror shape.

In addition, since the reflective electrode and the remainder layer generated during the imprint process are etched by using a single mask, the number of mask processes is reduced, the manufacturing process is simplified, and the manufacturing cost is low, compared to the conventional art.

Although the invention has been described with reference to particular embodiments, the description is an example of the invention's application and should not be taken as a limitation. Various adaptations and combinations of the features of the embodiments disclosed are within the scope of the invention as defined by the following claims.

## Claims

1. A thin film transistor substrate, comprising:
a reflection area and a transmission area formed in a pixel region;
a thin film transistor formed in the reflection area and connected to a gate line and a data line;
an imprint layer formed in the reflection area, the imprint layer having on an upper surface a optical pattern;
a reflective electrode formed on the optical pattern of the imprint layer, the reflective electrode having a pattern conforming to the optical pattern, wherein the imprint layer and the reflective layer are configured such that a portion of a drain electrode of the thin film transistor is exposed; and
a pixel electrode on the reflective electrode, the pixel electrode including a portion which contacts the drain electrode.

2. The thin film transistor substrate of claim 1, wherein the optical pattern has embossing shapes such that the reflective electrode defines a plurality of concave mirrors.

3. The thin film transistor substrate of claim 2, wherein the concave mirror has a shape that the right and left are asymmetrical.

4. The thin film transistor substrate of claim 2, wherein a contact location of the pixel electrode to the drain electrode is in the reflection area.

5. The thin film transistor substrate of claim1, wherein the contact between the pixel electrode and the drain electrode is adjacent a boundary between the reflection area and the transmission area.

6. The thin film transistor substrate of claim1, wherein the pixel electrode contacts the reflective electrode such that the pixel electrode overlaps the reflective electrode.

7. The thin film transistor substrate of claim1, further comprising a storage electrode which insulatedly overlaps the drain electrode to form a storage capacitor.

8. The thin film transistor substrate of claim1, wherein the imprint layer is a layer of an organic material.

9. A method of fabricating a thin film transistor substrate, the method comprising:
forming a pixel region having a reflection area on a substrate;
forming a thin film transistor connected to a gate line and a data line;
forming an imprint layer over the substrate;
modifying a surface of the imprint layer to form an optical pattern; and
forming a reflective electrode on the optical pattern of the imprint layer.

10. The method of claim 9, wherein the optical pattern is formed by using an imprint process.

11. The method of claim 9, wherein the reflective electrode is formed on the reflection area.

12. The method of claim9, wherein forming the reflective electrode comprises:
depositing a reflective layer on the optical pattern of the imprint layer;
forming a photoresist pattern exposing the reflective layer formed on the transmission area and the reflective layer corresponding to a contact portion; and
etching the reflective layer and the imprint layer by using the photoresist pattern as a mask to form the reflective electrode, the contact portion which exposes a portion of a drain electrode, and a transmission area.

13. The method of claim 12, wherein etching the reflective layer and the imprint layer comprising removing a remainder layer of the imprint layer formed by the imprint process.

14. The method of claim 13, wherein the remainder layer of the imprint layer is removed by using an ashing technique.

15. The method of claim 13, wherein the remainder layer of the imprint layer is removed by using a dry etching technique.

16. The method of claim 13, further comprising removing the photoresist pattern.

17. The method of claim 18, further comprising forming a pixel electrode connected to the drain electrode and the reflective electrode.

18. The method of claim 17, wherein the pixel electrode is formed over the whole pixel region.

19. The method according to claim 9, wherein forming a reflective electrode on the optical pattern defines a plurality of concave mirror regions.

20. The thin film transistor substrate according to claim 1, wherein the combined reflective electrode and the optical pattern of the imprint layer define a plurality of concave mirror regions.
